# EUROPÄISCHE PATENTANMELDUNG

(11) **EP 0 945 340 A1**
(43) Veröffentlichungstag der Anmeldung: **29.09.1999**
(21) Anmeldenummer: 98105615.3
(22) Anmeldetag: 27.03.1998
(51) Int. Cl.: B64C 1/00

(54) **Antriebssystem für ein Fluggerät**

(71) Anmelder: Frick Aerotech AG, 9490 Vaduz (LI)
(72) Erfinder: Frick, Alexander, 8874 Mühlehorn (CH)
(74) Vertreter: Troesch Scheidegger Werner AG

(57) **Zusammenfassung**

Das Antriebssystem umfasst mindestens zwei unabhängige Verbrennungsmotoren (4, 5), welche unmittelbar nebeneinander angeordnet und synchronisiert sind, von denen jeder auf eine gemeinsame Antriebswelle (9) wirkt. In jeder individuellen Antriebsverbindung (4 zu 9 bzw. 5 zu 9) sind Mittel vorgesehen, um bei merklichem Leistungsabfall diese Verbindung zu unterbrechen (Sollbruchstelle, automatische Kupplung).

## Beschreibung

Die vorliegende Erfindung betrifft ein Antriebssystem für ein Fluggerät, insbesondere ein Fluggerät, welches durch von einem Flügelradkompressor erzeugte Luftströme im Flug gehalten wird, mit einer Antriebsmotoranordnung und Übertragungsmitteln an die Auftrieb-/Vortriebaggregate des Fluggerätes.

Beim Antrieb von Fluggeräten werden an den bzw. die Motoren höchste Anforderungen bezüglich Betriebssicherheit gestellt.

Das Problem kann z.B. dadurch gelöst werden, dass zwei völlig unabhängige Motoren eingesetzt werden. Aus Gewichtsgründen kam das bis heute nur für grössere Leistungen in Frage.

Bei Antriebssystemen mit nur einem Verbrennungsmotor wird eine relativ aufwendige Doppelzündung verlangt, welche jedoch nur gegen gewisse Störungen im Zündungssystem wirksam ist.

Bei einmotorigen Antriebssystemen ist ein merklicher Leistungsabfall praktisch gleichbedeutend mit Totalausfall.

Für VTOL-Fluggeräte, insbesondere mittels Luft- bzw. Gasströmen im Flug gehaltene Fluggeräte kleinerer Abmessungen, kam bisher nur ein einzelner Motor für den Antrieb in Frage. Ein Motorausfall war auch hier gleichbedeutend mit Totalausfall und damit Absturz. Auch hier stand aus Gewichtsgründen und insbesondere Kostengründen die Lösung mit zwei separaten Motoren nicht zur Diskussion.

Aufgabe der vorliegenden Erfindung war es nun, ein Antriebssystem zu schaffen, welches die bisherigen Probleme vermeiden konnte.

Bei einem Antriebssystem der eingangs definierten Art konnte die gestellte Aufgabe erfindungsgemäss durch die Merkmale gemäss dem kennzeichnenden Teil von Anspruch 1 gelöst werden.

Besondere Ausführungsformen des erfindungsgemässen Antriebssystems sind in den abhängigen Ansprüchen definiert.

Die erfindungsgemässe Lösung hat überraschenderweise gezeigt, dass mit dem neuen Konzept im Vergleich zu einmotorigen Fluggeräten die Sicherheit wesentlich erhöht werden kann, ohne dass dabei die Kosten untragbar hoch werden. Dank dem erfindungsgemäss ausgebildeten Antriebssystem kann die Grösse des einzelnen Motors so gewählt werden, dass beide resp. alle Motoren zusammen die geforderte Gesamtleistung ergeben. Die Kosten für solche Motoren würden trotzdem sehr hoch ausfallen, wenn diese nur für Fluggeräte gebaut würden. Da sich der einzelne Motor aber auch für andere Zwecke (z.B. Antrieb kleiner Motorfahrzeuge, wie Motorräder) eignet, lassen sich Stückzahlen produzieren, welche die Kosten für den einzelnen Motor unerwartet tief halten.

Das erfindungsgemässe Antriebssystem eignet sich für kleinere Fluggeräte, bei welchen aus Gewichts- und Kostengründen zwei konventionelle Motoren nicht in Frage kommen und durch zwei oder mehrere unabhängige leichte Motoren, die direkt nebeneinander angeordnet, mechanisch miteinander synchronisiert auf eine gemeinsame Antriebswelle wirken, ersetzt werden. Wesentlich dabei ist die zwangsläufige bzw. automatische Abkopplung eines gegebenenfalls ausfallenden Motors von der gemeinsamen Antriebswelle. Zumindest ein für eine Notlandung ausreichender Weiterflug ist nach Abkopplung des ausfallenden Motors gewährleistet. Dies ist möglich, weil die Leistung des verbleibenden Motors nicht durch Verluste durch den nicht mehr betriebstüchtigen Motor beeinträchtigt wird.

Die Erfindung wird nachstehend anhand eines in der Zeichnung dargestellten Ausführungsbeispiels noch etwas näher erläutert.

Es zeigt:
- Fig. 1: eine Seitenansicht, rein schematisch, eines erfindungsgemässen Antriebssystems und
- Fig. 2: eine Ansicht von unten auf die Anordnung nach Fig. 1.

Das in der Zeichnung gezeigte erfindungsgemässe Antriebssystem eignet sich für kleine VTOL-Fluggeräte bzw. Triebwerke, für welche bisher aus Gewichts- und Kostengründen zwei separate Triebwerke nicht in Frage kamen.

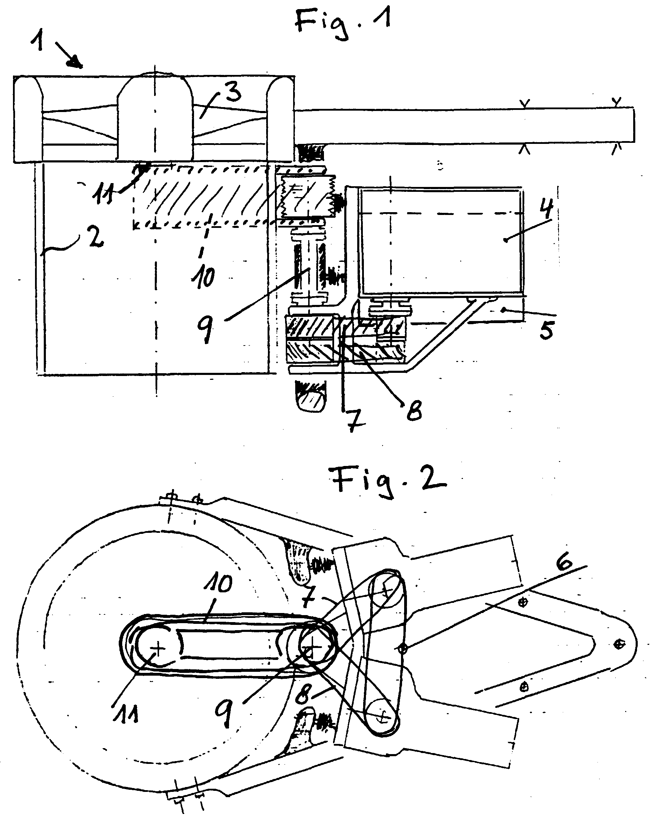

Das in den Fig. 1 und 2 gezeigte Antriebssystem dient dem Antrieb eines Flügelradkompressors 1 mit Luftkanal 2 (Teil eines Schubrohrsystems) für leichte VTOL-Fluggeräte. Für den Antrieb des Flügelrades 3 sind zwei kleine Verbrennungsmotoren 4 und 5 vorgesehen, welche über eine mechanische Verbindung, z.B. Zahnriemen 6, miteinander synchronisiert sind. Jeder der beiden Verbrennungsmotoren 4, 5 weist für den angestrebten Zweck geringe Gesamtabmessungen auf (z.B. ca. 500 x 250 x 300 mm). Die unmittelbar nebeneinander angeordneten Motoren 4, 5 weisen einen identischen Aufbau und gleiche Leistung auf. Die Motoren 4, 5 treiben über jeweils eine eigene Antriebsverbindung 7, 8 (z.B. Zahnriemen) eine gemeinsame Antriebswelle 9 für den Kompressor 1 an (der Antrieb kann von der Welle 9 z.B. über einen Riementrieb 10 auf die Welle 11 des Flügelrades 3 erfolgen).

Die Leistung der beiden Motoren 4, 5 ist so ausgelegt, dass damit der Flugbetrieb möglich ist. Sollte einer der beiden Motoren 4, 5 ausfallen, genügt die Leistung des zweiten Motors zumindest für eine Notlandung.

Damit dies aber bei der beschränkten Leistung der Motoren 4, 5 gewährleistet ist, muss bei Ausfall eines Motors dessen Antriebsverbindung zur gemeinsamen Antriebswelle 9 des Auftrieb-/Vortriebaggregates (Kompressor 1) unterbrochen werden, so dass der arbeitende Motor nicht zusätzlich Leistung verliert, um den nicht mehr betriebstüchtigen Motor "mitzubetreiben".

Der Unterbruch der Antriebsverbindungen zwischen den Motoren 4, 5 und der Welle 9 kann über Sollbruchstellen in einem Verbindungsglied, automatische Kupplungen und dergleichen erfolgen (an irgendeiner Stelle zwischen Motorausgang und Eingriff auf die Welle 9).

Der Unterbruch der Antriebsverbindung erfolgt automatisch, z.B. bei Auftreten einer Bremskraft (drehmomentabhängige Steuerung) in der Verbindung.

## Patentansprüche

1. Antriebssystem für ein Fluggerät, insbesondere ein Fluggerät, welches durch von einem Flügelradkompressor erzeugte Luftströme im Flug gehalten wird, mit einer Antriebsmotoranordnung und Übertragungsmitteln an die Auftrieb-/Vortriebaggregate des Fluggerätes, dadurch gekennzeichnet, dass die Antriebsmotoranordnung mindestens zwei voneinander unabhängige, miteinander synchronisierte Motoren mit jeweils gleicher oder ähnlicher Leistung umfasst, von denen jeder auf eine gemeinsame Antriebswelle der Auftrieb-/Vortriebaggregate wirkt, und dass Mittel vorgesehen sind, um bei Ausfall eines beliebigen der beiden Motoren dessen Antriebsverbindung mit der gemeinsamen Antriebswelle zu unterbrechen.

2. Antriebssystem nach Anspruch 1, dadurch gekennzeichnet, dass die Unterbruchmittel in jeder der Antriebsverbindungen zwischen den unabhängigen Motoren und der gemeinsamen Antriebswelle aus einer Sollbruchstelle in der Antriebsverbindung bestehen.

3. Antriebssystem nach Anspruch 2, dadurch gekennzeichnet, dass die Unterbruchmittel in jeder der Antriebsverbindungen zwischen den unabhängigen Motoren und der gemeinsamen Antriebswelle aus einer vorzugsweise selbsttätig wirkenden Kupplung in der Antriebsverbindung bestehen.

4. Antriebssystem nach einem der Ansprüche 1 bis 3, dadurch gekennzeichnet, dass die unabhängigen Motoren Verbrennungsmotoren sind, von denen bei Ausfall eines Motors der Betrieb der übrigen Motoren ausreicht, um mit dem Fluggerät weiterzufliegen oder zumindest eine sanfte Landung durchzuführen.

5. Antriebssystem nach einem der Ansprüche 1 bis 4, dadurch gekennzeichnet, dass die unabhängigen Motoren von identischer Bauart sind.
